# EUROPEAN PATENT SPECIFICATION

(11) **EP 1 258 523 B1**
(45) Date of publication and mention of the grant of the patent: **17.01.2007**
(21) Application number: 01112123.3
(22) Date of filing: 17.05.2001
(51) Int. Cl.: C09K 17/04

(54) **Procedure for preparation of prepackaged granule mixtures for ground consolidation injection**
Verfahren zur Herstellung vorverpackter Granulatmischungen für Bodenverfestigung
Procédé de préparation de mélanges granulaires préemballés pour la consolidation des sols

(43) Date of publication of application: 20.11.2002
(73) Proprietor: Elas Geotecnica S.r.l., Segrate S. Felice (MI) (IT)
(72) Inventor: Bonomi, Cristiano, 20068 Peschiera Borromeo (Milano) (IT)
(74) Representative: Gerli, Paolo

(56) References cited:
- EP-A- 0 149 226
- EP-A- 0 201 199
- DE-A- 3 426 811
- DATABASE WPI Section Ch, Week 199914 Derwent Publications Ltd., London, GB; Class L02, AN 1999-162074 XP002180416 & JP 11 019917 A (MITSUI ENG & SHIPBUILDING CO LTD), 26 January 1999 (1999-01-26)
- PATENT ABSTRACTS OF JAPAN vol. 008, no. 138 (C-231), 27 June 1984 (1984-06-27) & JP 59 049840 A (TAIYOU YAKUHIN KOGYO KK), 22 March 1984 (1984-03-22)

## Description

### Field of the invention

The present invention concerns the civil construction sector, in particular it concerns the procedure for obtaining a chemical compound to be used for injections to consolidate ground and cracked rock.

### Background of the invention

Ground consolidation and waterproofing operations consist typically in injecting into the ground liquid binding substances with variable setting and consistency according to the specific application, giving the ground the required properties. The injection procedure involves making a number of deep holes in the ground, inside which a reinforcing tube is fitted, typically a steel, fibreglass or plastic tube. Typically these tubes feature for their entire length a number of small radial holes (check valves) and an external diameter smaller than the hole made; the liquid binding substances are injected into the tubes in several phases under pressure, penetrating the ground as they flow out of the holes (check valves).

The product injected in this way fills the gaps and cracks in the ground and/or the rock, modifying the mechanical and hydraulic characteristics. By varying the percentage of the hardening mixture components according to rules that are well-known in the sector, it is possible to modify the mechanical or hydraulic characteristics of the ground, obtaining greater consolidating or waterproofing power respectively; by varying the percentage of water added and/or the mixing temperature, the viscosity (penetrability in the ground) and product setting time vary respectively, thus permitting application in different types of ground with different consistency.

The substances currently most widely used for ground consolidation and waterproofing are mixtures consisting of suspensions of products with self-hardening properties in water combined with occasional addition of colloidal products, for example mixtures based on portland and slag cement and bentonite which are self-hardening in water at room temperature. These mixtures provide acceptable results for the impregnation of granular ground with water permeability coefficient between 0.1 cm/s and 0.001 cm/s.

For finer granular ground, with a water permeability coefficient between 0.001 cm/s and 0.0001 cm/s, chemical mixtures or ultra-fine cement-based mixtures are preferred; for example chemical mixtures based on water solutions of sodium silicate with the addition of inorganic reagents. Typically the cements currently used for injection of the ground have a specific surface of between 2500 cm²/g and 5000 cm²/g while the specific surface of ultra-fine cements can reach 20,000 cm²/g.

Cement-based substances, also in the case of ultra-fine cement, have obvious application limits in the case of application in fine granular ground or finely cracked rock where the mixture must have a low viscosity for maximum ground penetration.

For these applications, where the water permeability coefficients are often below 0.0001 cm/s, it is known that chemical mixtures, usually based on mineral products, can penetrate ground which even the finest cement mixtures are unable to penetrate.

The great disadvantage of the chemical mixtures currently on the market is that transport, storage and above all preparatory work on site are complex, laborious and, last but not least, dangerous. For example, the French patent FR 8511773 dated 1.8.1985 involves transport to the site of water solutions of sodium silicate with a silica/soda ratio (SiO₂/Na₂O) comprised between 1 and 1.3; just before injection into the ground, calcium carbonate is added to these solutions and essential energy is provided by means of mechanical agitation; the hardening reaction is thus activated and the fluid mixture, after being injected, hardens, thus consolidating and waterproofing the ground. The disadvantage of this procedure is that caustic solutions with a high soda content have to be stored, transported and handled, in addition to the need to add calcium carbonate paying great attention to the stoichiometric ratios and taking all due safety precautions.

The Italian patent Ml 98A000196 dated 3.2.1998 describes an alternative procedure for preparing mixtures suitable for consolidation injections which uses, in the main, the same reagents as the above-mentioned French patent, with a soda/silica (Na₂O/Si₂O) ratio comprised between 0.8 and 1.2. In this case a water solution of sodium silicate and a pre-heated water suspension of calcium salt are prepared; said solution and suspension are then mixed, thus obtaining the mixture ready for injection into the ground. This procedure also involves prolonged handling of caustic solutions of silicate and soda, with the further disadvantage of laborious preparation of two separate water systems which have to be mixed together in precise stoichiometric quantities, and of having to exercise caution in the handling of large product quantities. There is therefore a need for chemical mixtures for ground consolidation and waterproofing injections that can be easily stored, transported and activated quickly by means of simple non-hazardous operations. There is also the need for a chemical mixture ready for use on site, available in various different compositions for different specific applications.

### Abstract

The present invention describes a product that can be used for consolidation and waterproofing of ground which is inexpensive and particularly easy to prepare on site. The product according to the present invention consists of granules with a core based on sodium silicate in set proportions, covered with finely ground calcium salts. The coated granules thus obtained form a stable multi-component chemical mixture which is easy to handle and which, via appropriate addition of water and mechanical agitation inside a mixer, quickly provides the required chemical solution ready for injection into the ground.

### Description of the figures

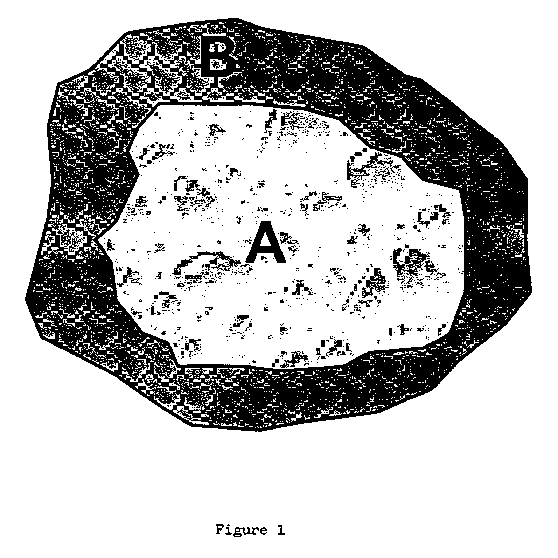

Figure 1: section of a consolidation granule comprising a core (A) based on sodium silicates, and a coating (B) of calcium salts.

### Detailed description of the invention

The subject of the present invention is a product in granule form, for ground consolidation and waterproofing injections, where said granules comprise: a core (A) consisting of a sodium silicate-based mixture, in which the SiO₂/Na₂O ratio is comprised between 1 and 1.3, covered externally by a coating (B) of calcium salts.

The sodium silicates originally contain a certain percentage of Na₂O which is indicated via the value of the silica/Na₂O ratio.

In one form of embodiment of the present invention, the granules comprise additional layers of coating based on said calcium salts.

The granules subject of the present invention are dry: this means that the end product does not contain water or other added liquids; the salts used in formation of the granule, i.e. the sodium silicates constituting the core (A) and the calcium salts constituting the coating (B), can be anhydrous and/or contain hydration molecules, for example pentahydrate sodium silicate.

The calcium salts that constitute the coating (B) preferably have a solubility in water, at room temperature, comprised between 0.01 and 2 g per litre, and are preferably present in a finely ground form, i.e. with specific surface of at least 8,000 cm²/g; a calcium salt preferred for the coating (B) is calcium carbonate. The term "calcium salt" also includes hydrated lime (calcium hydroxide) as a salt of calcium hydrate; this is also a preferred product for the purposes of the invention.

In addition the calcium salts constituting the coating (B) can be coated beforehand with a film of animal or synthetic fat for surface protection if necessary.

The granules subject of the present invention can comprise in the core (A), in addition to the sodium silicates, and/or in the coating (B), in addition to the calcium salts, inert filler materials such as dolomite rock, finely ground with a surface of at least 10,000 cm²/g up to 40% in weight.

The dimension of the coated granules according to the present invention is preferably comprised between 0.5 mm and 1 mm. This dimension range can be obtained by means of sieving, for example.

More in particular the granules subject of the present invention comprise a core (A) consisting of pentahydrate sodium silicate in which the SiO₂/Na₂O ratio is comprised between 1 and 1.3, and the coating (B) consists of finely ground powders of calcium carbonate (CaCO₃) and hydrated lime (Ca (OH)₂) with specific surface of at least 10,000 cm²/g.

The injection mixture is obtained by placing a set quantity of said granules in a set volume of water, typically in a ratio of 400 to 900 Kg for very 1000 litres of water according to the application, and vigorously stirring the mixture for a few minutes, following the operating procedures required for the production of a cement mixture.

When the mixture is evenly blended, it can be injected into the ground; in the meantime the calcium ions are gradually released by hydrolysis and react with the silicate components to form hydrated calcium silicates.

This reaction permits the solubilisation of other calcium ions which in their turn react to form hydrated calcium silicates, thus producing a gradual reaction in a period of time varying from one to several hours which permits application of the mixture.

The setting time can be varied by means of known techniques, for example by adjusting the solubility of the chosen calcium-based compound, it being clear that said time varies inversely to the solubility of the compound in water, typically comprised between 0.01 and 2 g per litre. The setting time also depends on the SiO₂/Na₂O ratio of the silicate (and varies in the same direction as the ratio from 1 to 1.3), and on the temperature; the dissolution in water of the anhydrous or pentahydrate sodium silicates produces a temperature increase that can be exploited to further reduce the setting times.

A second aim of the invention is to develop a procedure for preparation of the above-described granular product.

This procedure is characterised by the fact that granules of sodium silicate, in which the SiO₂/Na₂O ratio is comprised between 1 and 1.3 (core (A)) are covered with calcium salts (coating (B)).

The granular sodium silicate that can be used as core (A) in the present invention is available on the market, or can be produced by means of known powder agglomeration techniques.

The core (A) is covered with calcium salts to form coating (B) by means of known coating procedures. These procedures consist preferably in dry adhesion procedures that do not involve permanent adhesion between core and coating. A preferred method for obtaining this result is the following: the silicate granules and the calcium salt are placed in a high turbulence mixer, in which turbulence is obtained by jets of air together with a mechanical action (e.g. rotation of the mixing chamber: rotating drum mixer); the procedure is performed at a mixing chamber temperature of between 27 and 35°C, for a time between 30 seconds and 2 minutes.

The granules subject of the invention constitute a multi-component chemical mixture which remains stable when stored and which, by simply mixing with water, quickly becomes a solution ready for use. Unlike the known mixtures, the granular mixtures subject of the present invention can be handled more safely by construction personnel.

In addition, the granule subject of the invention permits high solubilisation in water of the mixture components, thus obtaining, in a short time, liquid mixtures with high uniformity, fluidity and ground penetration capacity.

The mixtures subject of the invention have self-hardening properties. This does not exclude the addition of further products which are self-hardening in water, combined if necessary with occasional additions of colloidal products, for example cement-based mixtures and slag cement and bentonite products which are self-hardening in water at room temperature.

From the above it can be seen that the procedure according to the present invention achieves its set objectives, offering in particular the following advantages:
- The granules have a high dissolution, fluidity and penetration capacity and consolidation or waterproofing are consequently more effective.
- The ready-to-inject mixture, consisting of the granules subject of this invention, is obtained on site by simply adding water and mixing the product, thus reducing effort and risk; transport of the water necessary for pumping and storage of solutions and suspensions and the need to keep caustic products constantly stirred are also avoided.
- The component in powder form has a fineness similar to that of ultra-fine cement and permits a high level of ground penetration.

The granules can be kept indefinitely in an anhydrous environment.

The very fine powder component is gradually solubilised by hydrolysis so that the setting time can be varied according to the application.
- The reaction between components is gradual and occurs at room temperature.
- The reaction product is ionic, therefore crystalline and stable in the long term.

The examples provided below are intended purely as a further description of the invention without limitative purpose since all possible modifications within the capacity of an expert in the sector can be made while remaining within the protection of the inventive field defined by the above description and claimed below.

### Example 1

Powder consisting of grains, the core (A), of anhydrous sodium metasilicate with SiO₂/Na₂O ratio =1.0 are mixed dry with calcium carbonate powder, with specific surface of 8,000 cm²/g, in order to cover said sodium metasilicate grains with a coating (B) of calcium salts. The sodium metasilicate grains and the calcium carbonate powder are placed in a high turbulence mixer (rotating drum mixer) which, by means of jets of air and by mechanical action, at a mixing chamber temperature of 30°C for 1 minute, leads to the formation of coated granules.

The coated granules obtained as above are then kept in a closed receptacle for 180 days in order to observe any dry reactions between the two components: the core (A) of sodium metasilicate and the coating (B) of calcium carbonate. The mixture of these granules is then placed in water.

The following procedure is then adopted:
in a lined receptacle, connected to a thermostat set to 20°C, 199 g of granulate containing 45.2% calcium carbonate and 54.8% sodium metasilicate are added to 464 g of water; the operation is performed by agitation in a mixer. The degree of solubility of the granules in the water is ascertained by analysing the mixture obtained with a Turner nephelometer. The result of the analysis indicates the presence of an insoluble residue of less than 3%. The mass hardening time is 60 minutes.

### Example 2

The same procedure as example 1 is followed, using powder consisting of anhydrous sodium metasilicate with SiO₂/Na₂O ratio =1.0 and pentahydrate sodium metasilicate with Rp=1.0 as the grains forming the core (A), binding them dry. In this case the quantity of water is 382 g and the quantity of granulate mixture 280 g with a calcium carbonate content of 32.2% and 67.8% of pentahydrate sodium metasilicate. The operation is performed stirring in an immersion mixer for one minute; the mass hardening time is 125 minutes.

### Example 3

Example 2 is repeated with the pentahydrate sodium metasilicate with SiO₂/Na₂O ratio = 1.0. In this case the quantity of water is 366 g and the quantity of granules 317 g with a calcium carbonate content of 33.1% and 66.9% of pentahydrate sodium metasilicate. The mass hardening time is 75 minutes.

## Claims

1. Granules for ground consolidation and waterproofing injections comprising: a core (A) consisting of a sodium-silicate based mixture in which the SiO₂/Na₂O ratio is comprised between 1 and 1.3, covered externally by a coating (B) of calcium salts.

2. Granules according to claim 1 wherein the sodium silicates constituting the core (A) and the calcium salts constituting the coating (B) are anhydrous and/or contain hydration molecules.

3. Granules according to claim 1 wherein the calcium salts that constitute the coating (B) have a solubility in water, at room temperature, comprised between 0.01 and 2 g per litre.

4. Granules according to claim 1 wherein the calcium salts that constitute the coating (B) are present in a finely ground form with specific surface of at least 8.000 cm²/g.

5. Granules according to claim 1 wherein the calcium salts that constitute the coating (B) are selected from the group consisting of: calcium carbonate, calcium hydroxide or their mixtures.

6. Granules according to claim 1 that comprise in the core (A) and/or in the coating (B) also finely ground inert filler materials with a surface of at least 10,000 cm²/g up to a percentage of 40% in weight.

7. Granules according to claim 1 with dimensions comprised between 0.5 mm and 1 mm.

8. Granules according to claim 1 in which the core (A) consists of pentahydrate sodium silicate in which the SiO₂/Na₂O ratio is between 1 and 1.3, and the coating (B) consists of finely ground powders of calcium carbonate (CaCO₃) and slaked lime (Ca (OH)₂) with specific surface of at least 10,000 cm²/g.

9. Process for the preparation of granules according to claim 1 **characterised in that** granules of sodium silicate, in which the SiO₂/Na₂O ratio is between 1 and 1.3 (core (A)), are covered with calcium salts (coating (B)).

10. Process according to claim 9 wherein covering of the core (A) with calcium salts to form the coating (B) is performed by dry adhesion procedures.

11. Process according to claim 10 wherein the dry adhesion procedure between the silicate grains and the calcium salts is performed by means of a high turbulence mixer at a mixing chamber temperature comprised between 27 and 35°C, for a time comprised between 30 seconds and 2 minutes.

12. Granular mixtures comprising the granules according to claim 1.

13. Liquid mixtures comprising water and granular mixtures according to claim 12.

14. Use of the granules according to claim 1 for ground consolidation and waterproofing.

15. Use according to claim 14 wherein the granules are in a mixture with water and injected in the ground.

16. Use according to claim 15 wherein the granules are in a quantity comprised between 400 and 900 kg for every 1000 litres of water.

## Patentansprüche

1. Granulat zur Bodenverfestigung und zum Einpressen von Feuchtigkeitssperren, welches umfasst: einen Kern (A), welcher aus einer Mischung auf der Grundlage von Natriumsilikaten besteht, in welcher das SiO₂/Na₂O-Verhältnis zwischen 1 und 1,3 liegt, wobei der Kern außen durch einen Überzug (B) aus Kalziumsalzen bedeckt ist.

2. Granulat gemäß Anspruch 1, bei welchem die Natriumsilikate, die den Kern (A) bilden, und die Kalziumsalze, die den Überzug (B) bilden, wasserfrei sind und/oder Hydratisierungsmoleküle enthalten.

3. Granulat gemäß Anspruch 1, bei welchem die Kalziumsalze, die den Überzug (B) bilden, bei Raumtemperatur eine Löslichkeit in Wasser zwischen 0,01 und 2 g pro Liter aufweisen.

4. Granulat gemäß Anspruch 1, bei welchem die Kalziumsalze, welche den Überzug (B) bilden, in feingemahlener Form mit einer spezifischen Oberfläche von mindestens 8.000 cm²/g vorliegen.

5. Granulat gemäß Anspruch 1, bei welchem die Kalziumsalze, die den Überzug (B) bilden, aus einer Gruppe ausgewählt werden, welche aus Kalziumkarbonat, Kalziumhydroxid oder ihren Mischungen besteht.

6. Granulat gemäß Anspruch 1, welches im Kern (A) und/oder im Überzug (B) bis zu einem Anteil von 40 Gew.-% auch feingemahlene, inerte Füllmaterialien mit einer Oberfläche von mindestens 10.000 cm²/g enthalten.

7. Granulat gemäß Anspruch 1 mit Korngrößen zwischen 0,5 mm und 1 mm.

8. Granulat gemäß Anspruch 1, bei welchem der Kern (A) aus Natriumsilikat-Pentahydrat mit einem SiO₂/Na₂O-Verhältnis zwischen 1 und 1,3 und der Überzug (B) aus feingemahlenen Pulvern aus Kalziumkarbonat (CaCO₃) und Löschkalk (Ca(OH)₂) mit einer spezifischen Oberfläche von mindestens 10.000 cm²/g besteht.

9. Verfahren zur Herstellung von Granulat gemäß Anspruch 1, **dadurch gekennzeichnet, dass** die Natriumsilikat-Körnchen, bei denen das SiO₂/Na₂O-Verhältnis zwischen 1 und 1,3 (Kern (A)) liegt, mit Kalziumsalzen (Überzug (B)) bedeckt werden.

10. Verfahren gemäß Anspruch 9, bei welchem die Umhüllung des Kerns (A) mit Kalziumsalzen zwecks Bildung des Überzugs (B) durch Trockenadhäsionsverfahren erfolgt.

11. Verfahren gemäß Anspruch 10, bei welchem das Verfahren der Trockenadhäsion zwischen den Silikatkörnchen und den Kalziumsalzen mittels eines Hochturbulenz-Mischers bei einer Mischkammertemperatur zwischen 27 und 35 °C und einer Verweilzeit zwischen 30 Sekunden und 2 Minuten ausgeführt wird.

12. Granulatmischungen, welche das Granulat gemäß Anspruch 1 umfassen.

13. Flüssige Mischungen, welche Wasser und die Granulatmischungen gemäß Anspruch 12 umfassen.

14. Verwendung des Granulats gemäß Anspruch 1 zur Bodenverfestigung und für Feuchtigkeitssperren.

15. Verwendung gemäß Anspruch 14, bei welcher sich das Granulat in einer Mischung mit Wasser befindet und in den Untergrund eingepresst wird.

16. Verwendung gemäß Anspruch 15, bei welcher das Granulat in einer Menge zwischen 400 und 900 kg auf jeweils 1000 Liter Wasser vorliegt.

## Revendications

1. Granulés pour consolidation des sols et injections pour imperméabilisation comprenant : un noyau (A) constitué d'un mélange à base de silicate de sodium dans lequel le rapport SiO₂/Na₂O est compris entre 1 et 1,3, recouvert sur l'extérieur d'un revêtement (B) de sels de calcium.

2. Granulés selon la revendication 1 dans lequel les silicates de sodium constituant le noyau (A) et les sels de calcium constituant le revêtement (B) sont anhydres et/ou comprennent des molécules d'hydratation.

3. Granulés selon la revendication 1 dans lequel les sels de calcium qui constituent le revêtement (B) présentent une solubilité dans l'eau, à température ambiante, comprise entre 0,01 et 2 g par litre.

4. Granulés selon la revendication 1 dans lequel les sels de calcium qui constituent le revêtement (B) sont présents sous une forme finement broyée avec une surface spécifique d'au moins 8 000 cm²/g.

5. Granulés selon la revendication 1 dans lequel les sels de calcium qui constituent le revêtement (B) sont choisis dans le groupe constitué de : carbonate de calcium, hydroxyde de calcium ou leurs mélanges.

6. Granulés selon la revendication 1 qui comprend dans le noyau (A) et/ou dans le revêtement (B) des matériaux de charge inertes finement broyés avec une surface d'au moins 10 000 cm²/g jusqu'à un pourcentage de 40 % en poids.

7. Granulés selon la revendication 1 avec des dimensions comprises entre 0,5 mm et 1 mm.

8. Granulés selon la revendication 1 dans lesquels le noyau (A) est constitué de silicate de sodium pentahydrate dans lequel le rapport SiO₂/Na₂O est entre 1 et 1,3 et le revêtement (B) est constitué de poudres finement broyées de carbonate de calcium (CaCO₃) et de chaux éteinte (Ca(OH)₂) avec une surface spécifique d'au moins 10 000 cm²/g.

9. Procédé de préparation de granulés selon la revendication 1 **caractérisé en ce que** les granulés de silicate de sodium dans lesquels le rapport SiO₂/Na₂O est entre 1 et 1,3 (noyau (A)) sont recouverts de sels de calcium (revêtement (B)).

10. Procédé selon la revendication 9 dans lequel le revêtement du noyau (A) avec des sels de calcium pour former le revêtement (B) est réalisé au moyen de processus d'adhésion à sec.

11. Procédé selon la revendication 10 dans lequel le processus d'adhésion à sec entre les grains de silicate et les sels de calcium est réalisé au moyen d'un malaxeur à haute turbulence à une température de chambre de mélange comprise entre 27 et 35°C pour un temps compris entre 30 secondes et 2 minutes.

12. Mélanges granulaires comprenant les granulés selon la revendication 1.

13. Mélanges liquides comprenant de l'eau et les mélanges granulaires selon la revendication 12.

14. Utilisation des granulés selon la revendication 1 pour consolidation et imperméabilisation des sols.

15. Utilisation selon la revendication 14 dans lequel les granulés sont dans un mélange avec de l'eau et sont injectés dans les sols.

16. Utilisation selon la revendication 15 dans lequel les granulés sont en une quantité comprise entre 400 et 900 kg pour 1 000 litres d'eau.
